Europäisches Patentamt

European Patent Office

Office européen des brevets

(19)

(11) EP 0 311 494 B2

(12) **NOUVEAU FASCICULE DE BREVET EUROPEEN**

(45) Date de publication et mention de la décision concernant l'opposition:
**26.03.1997 Bulletin 1997/13**

(45) Mention de la délivrance du brevet:
**16.12.1992 Bulletin 1992/51**

(21) Numéro de dépôt: **88402484.5**

(22) Date de dépôt: **30.09.1988**

(51) Int Cl.6: **H04B 1/66**, G10L 9/14

(54) **Procédé et installation de transmission numérique de parole entre mobiles**

Verfahren und Einrichtung zur digitalen Sprachübertragung zwischen beweglichen Stationen

Method and apparatus for digital transmission of speech between mobile stations

(84) Etats contractants désignés:
**BE DE ES GB GR IT LU NL**

(30) Priorité: **02.10.1987 FR 8713669**

(43) Date de publication de la demande:
**12.04.1989 Bulletin 1989/15**

(73) Titulaire: **MATRA COMMUNICATION 29101 Quimper (FR)**

(72) Inventeurs:
• **Tassy, Alain**
  **F-92600 Asnieres (FR)**
• **Lecomte, Isabelle**
  **F-78392 Bois d'Arcy Cedex (FR)**
• **Lever, Michel**
  **F-78392 Bois d'Arcy Cedex (FR)**
• **Lelievre, Laurent**
  **F-78760 Jours-Pontchartrain (FR)**

(74) Mandataire: **Fort, Jacques**
  **CABINET PLASSERAUD**
  **84, rue d'Amsterdam**
  **75009 Paris (FR)**

(56) Documents cités:
**EP-A- 0 116 975**

• **ICASSP 86 - PROCEEDINGS OF THE INTERNATIONAL CONFERENCE ON ACOUSTICS, SPEECH AND SIGNAL PROCESSING, Tokyo, 7-11 avril 1986, vol. 2, pages 857-860, IEEE, Tokyo, JP; A. LE GUYADER et al.: "A robust 16 KBITS/S vector adaptive predictive coder for mobile communications"**
• **PROCEEDINGS ICDSC-7 7TH INTERNATIONAL CONFERENCE ON DIGITAL SATELLITE COMMUNICATIONS, Munich, 12-16 mai 1986, pages 785-790, VDE-Verlag GmbH, Berlin, DE; T. ARASEKI et al.: "A high quality multi-pulse LPC coder for speech transmission below 16 KBPS"**
• **ICASSP '80 - PROCEEDINGS OF THE INTERNATIONAL CONFERENCE ON ACOUSTICS, SPEECH AND SIGNAL PROCESSING, Denver, Colorado, 9-11 avril 1980, vol. 2/3, pages 360-364, IEEE, New York, US; A.B. WADIA: "Error correction scheme for telephone line transmission of RELP VOCODER"**
• **PKI Technische Mitteilungen, No. 1/87, MATS-D-Sprachcodierung mit Fehlerschutz.**

## Description

La présente invention a pour objet un procédé et une installation de transmission numérique à débit modéré, applicable à la transmission de parole entre mobiles, et vers les mobiles, qui est affectée de phénomènes parasites, notamment de bruit de fond à l'émission et de perturbations dues au canal de transmission. Ces perturbations de la transmission radiophonique ne peuvent être modélisées par un bruit blanc gaussien. Il s'y ajoute un phénomène d'évanouissements (fading de Rayleigh) dont la durée peut atteindre 60 ms, dû aux trajets multiples, et des perturbations dues aux étincelles d'allumage du moteur à explosion équipant le mobile. Lorsque la cadence de transmission des bits est de 8 kbits/s, ce qui sera fréquemment le cas lorsqu'on utilise un canal radio numérique à 80 MHz, chaque étincelle est susceptible de perturber 4 bits consécutifs. A la vitesse maximum du moteur, la période de répétition des étincelles correspond à un intervalle de 36 bits au moins, toujours pour une cadence de 8 kbits/s.

On connait déjà divers procédés de codage prévus pour résister au bruit. En particulier l'article de A. Le Guyader et al dans ICASSP 86 - PROCEEDINGS OF THE INTERNATIONAL CONFERENCE ON ACOUSTICS, SPEECH AND SIGNAL PROCESSING, Tokyo, 7-11 avril 1986, vol. 2, pages 857-860, IEEE, Tokyo, JP, intitulé "A robust 16 KBITS/S vector adaptive predictive coder for mobile communications" fait connaître un procédé de codage pour la transmission de parole permettant la correction d'erreurs par emploi de bits redondants protégés et répartis dans la trame. L'article de T. Arasaki et al dans PROCEEDINGS ICDSC-7 7TH INTERNATIONAL CONFERENCE ON DIGITAL SATELLITE COMMUNICATIONS, Munich, 12-16 mai 1986, pages 785-790, VDE-Verlag GmbH, Berlin, intitulé "A high quality multi-pulse LPC coder for speech transmission below 16 KBPS" fait connaître de son côté une installation de procédé de transmission numérique de la parole et comprenant un ensemble d'analyse MPLPC et un circuit de codage par blocs.

On connaît également (PK2 Technische Mitteilungen, N° 1/87) un procédé conforme au préambule de la revendication 1. De plus, le document "Transactions of the IECE of Japan", E-65, n° 7, enseigne un entrelacement destiné à réduire le taux d'erreur, mais avec un entrelacement sur une durée plus grande que l'intervalle moyen des bruits impulsionnels.

La présente invention vise a fournir un procédé et une installation de transmission numérique de parole tenant compte de la nature de cette dernière (qui pratiquement oblige à fonctionner en temps réel et interdit les répétitions mais tolère un taux d'erreurs binaires approchant $10^{-2}$ et autorise la reconstitution de trame perdue du fait de l'évanouissement) permettant une transmission de la parole dans un canal de relativement faible largeur, ne mettant en oeuvre que des moyens simples et pour la plupart également utilisables pour la transmission, en alternance, de données.

Dans ce but, l'invention propose notamment un procédé suivant la revendication 1.

Pour la transmission de la parole sur des canaux radionumériques à 80 MHz, espacés de 12,5 kHz, on peut notamment échantillonner la parole à une fréquence de 8 kHz, chaque échantillon étant par exemple codé sur 12 bits, puis répartir les échantillons en trames de 160 échantillons. La prédiction linéaire à excitation multi-impulsionnelle peut modéliser la parole par un modèle autorégressif d'ordre 8, le signal d'excitation étant découpé pour être affecté à 5 intervalles de 32 échantillons, affectés chacun d'une paire d'échantillons non nuls.

Une trame vocodeur peut alors être générée à partir de 120 bits du signal analysé représentant 20 ms de signal (c'est-à-dire 6 000 bits/s), offrant un taux de redondance tel que la transmission peut s'effectuer sous forme de trames de 160 bits ayant, en plus d'un octet de synchronisation et d'un octet de champ, 144 bits utiles. Les 120 bits de la trame vocodeur d'origine sont répartis en :

- 85 bits représentant la position des impulsions,
- 5 bits représentant l'énergie ou amplitude des impulsions,
- 30 bits représentant les coefficients du filtre, seuls étant codés, suivant un code autocorrecteur, 21 bits de poids fort parmi les bits d'énergie et de coefficients, à savoir :
- 3 bits d'énergie,
- 18 bits de coefficients.

On peut notamment utiliser, comme code auto-correcteur, un code BCH (Bose Chaduri Hocquenghem) dont on pourra trouver une description dans le livre de JC Bic et col., "Eléments de communications numériques" Bordas, 1986. En particulier, on peut répartir les 21 bits à coder en priorité en trois blocs de chacun 7 bits, protégés chacun par un code BCH (15,7,2) capable de corriger, avec 8 bits de redondance, deux erreurs quelconques dans un bloc de 15 bits.

Enfin, les bits protégés sont répartis dans la trame de 144 bits de façon telle que les étincelles ne puissent perturber que deux bits dans un même bloc. Pour cela, la répartition destinée à assurer l'emplacement temporel sera avantageusement telle que :

- il y ait au moins, quatre bits entre deux bits successifs protégés du même bloc, et
- un bloc de 15 bits soit transmis en moins de 70 bits pour éviter d'être affecté par plus de deux étincelles d'allumage, même à la vitesse maximale d'un moteur à explosion courant.

L'invention propose également une installation suivant la revendication 6 permettant de mettre en oeuvre le procédé ci-dessus défini; dans un mode de réalisation dans lequel l'émetteur (ou le récepteur) est essentiellement constitué d'un processeur de signal TMS 32010, assurant dans l'émetteur l'analyse MPLPC, le codage autocorrecteur et l'entrelacement, et un micro-contrôleur, tel que le MC 68701, assurant la synchronisation de trame. La transmission sera avantageusement effectuée en utilisant la modulation à gradient de phase minimal, souvent désignée par l'une des désignations anglo-saxonnes "gaussian minimum shift keying" ou "fast frequency shift keying", dite FFSK.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1 est un schéma montrant les transformations successives effectuées sur une trame de bits de parole après analyse, lors du codage et de l'entrelacement,
- la figure 2 montre, de façon détaillée, le codage des bits à protéger,
- la figure 3, similaire à la figure 2, montre le décodage à la réception,
- les figures 4 et 5 montrent la constitution de principe d'un émetteur et d'un récepteur.

Le procédé et l'installation qui seront décrits à titre d'exemple sont destinés à la transmission numérique de parole avec un débit de 8 kbits/s sur un canal radio séparé des canaux voisins de 12,5 kHz à 80 MHz. A l'émission, le procédé comporte successivement :

- un échantillonnage à 8 kHz, avec découpage en intervalles de 160 échantillons chacun,
- une analyse par prédiction linéaire à excitation multi-impulsionnelle (MPLPC) et un codage auto-correcteur par blocs, conduisant à des trames de 144 bits, correspondant chacune à un intervalle,
- un entrelacement temporel réduisant l'effet des parasites d'allumage, et
- l'émission par modulation de porteuse à gradient de phase minimal (GMSK).

Dans chaque trame un parasite dû à une étincelle d'allumage peut affecter à la réception 4 bits successifs avec chaque fois une probabilité d'erreur de 1/2. Le code auto-correcteur est prévu de façon que chaque étincelle d'allumage ne puisse provoquer que des erreurs susceptibles d'être corrigées, sans pour autant que la complexité ne devienne rédhibitoire ou que le retard de transmission dépasse la longueur d'une trame.

Les diverses étapes ci-dessus seront traitées successivement.

Analyse

Chaque intervalle de 160 échantillons est soumis par analyse MPLPC, en elle-même bien connue. Cette analyse consiste à représenter un segment de résidu par un nombre déterminé d'échantillons non nuls caractérisés par leur position sur le segment et leur amplitude. Ces impulsions sont utilisées à la réception pour synthétiser la parole : elles sont appliquées à un filtre dont les coefficients sont extraits, pour chaque intervalle, par des algorithmes connus, puis transmis pour exciter le filtre. Ce dernier sera généralement purement auto-régressif (AR) car un signal de parole est en général assimilable à la réponse d'un filtre AR linéaire à une excitation périodique.

Les impulsions d'excitation sont élaborées suivant un algorithme minimisant l'erreur quadratique moyenne entre le signal reconstitué $\hat{s}(n)$ et le signal original de parole échantillonné $s(n)$. Il sera souvent avantageux, pour tenir compte des propriétés de la perception auditive, de pondérer l'erreur que l'on cherche à minimiser afin de déplacer l'énergie du signal d'erreur vers les zones formantiques où elle est mieux masquée par l'énergie du signal de parole. On pourra, en tant que de besoin, se reporter à des documents donnant des tables de quantification des coefficients du filtre et de l'ensemble des couples amplitude-position représentant les impulsions. On peut notamment citer à titre d'exemples la communication de M. BEROUTI et coll. "Efficient computation and encoding of the multipulse excitation for LPC" Proc. ICASSP 84, pp 10-1.1 à 10-1.4 et la thèse de 3ème cycle de M. LEVER "Etude d'un vocodeur à prédiction linéaire et excitation multi-impulsionnelle ...", université de Rennes I, Dec. 85.

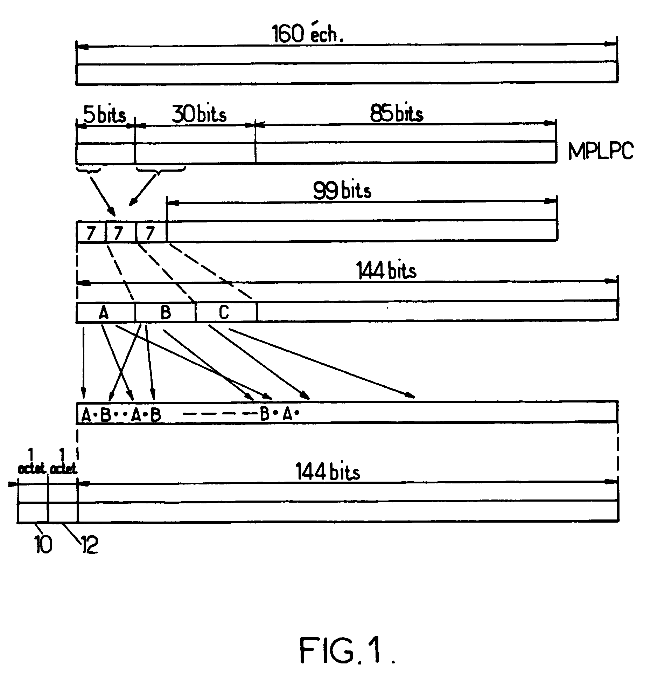

La première ligne de la figure 1 montre schématiquement un intervalle de 160 échantillons, correspondant à une durée de 20 ms. L'analyse MPLPC permet de modéliser le conduit vocal par un filtre AR d'ordre 8 et son signal d'excitation, représenté dans cinq tranches, de 32 échantillons chacune, par cinq paires d'échantillons non nuls. Les paramètres d'analyse (8 coefficients de reflexion du filtre, amplitude maximale, positions et amplitude normalisées des impulsions) représentent 120 bits, répartis entre :

30 bits de coefficient de filtre,
5 bits d'amplitude, et
85 bits de position d'impulsions.

L'expérience a montré que les conséquences d'une erreur sur un bit étaient de gravité différente suivant la nature du bit : une erreur sur une impulsion dégrade moins le signal qu'une erreur sur les coefficients du filtre et naturellement l'erreur a d'autant plus de conséquence qu'elle frappe un bit de poids fort.

L'invention tient compte de cette différence d'effet en n'appliquant un code auto-correcteur par bloc qu'aux bits les plus sensibles de la trame, c'est-à-dire à ceux sur lesquels une erreur a un maximum de conséquence. On peut notamment se borner à coder 21 bits :

- 3 bits d'énergie ou amplitude,

- 18 bits de poids fort des coefficients du filtre, dont la répartition peut être, pour un filtre à huit coefficients, 4 + 4 + 3 + 3 + 3 + 1 + 1 + 0.

Le débit du canal étant d'environ 8 kbits/s alors que l'analyse correspond à un débit de 6 kbits/s on dispose d'un taux de redondance d'environ 1,33. Si on souhaite inclure dans chaque trame du signal émis un octet de synchronisation 10 et un octet de champ 12 (figure 1) on dispose de 45 bits pour représenter les 21 bits à protéger.

En conséquence, on utilise avantageusement un code BCH (15, 7, 2) qui permet de corriger avec 8 bits de redondance deux erreurs quelconques dans n bloc de 15 bits. Chaque jeu de 21 bits codés est réparti en trois blocs de 7 bits et représenté par 3 blocs de 15 bits désignés par A, B et C à la quatrième ligne de la figure 1 et obtenus à l'aide du polynôme générateur :

$$g(x) = (X^4 + X + 1)(X^4 + X^3 + X^2 + X + 1)$$

Si la répartition montrée sur cette ligne était conservée, quatre bits d'un même bloc de quinze bits pourraient être affectés par une étincelle. Pour limiter le nombre de bits erronés que peut comporter chaque bloc, la trame est soumise à un entrelacement.

Il faut remarquer au passage que d'autres codes correcteurs seraient utilisables, éventuellement pour permettre la correction de trois erreurs (erreurs aléatoires ou dues aux étincelles) au prix d'une complexité accrue. A titre d'exemple on peut citer l'utilisation de deux mots d'un code BCH (23, 12, 7).

Entrelacement

L'entrelacement vise à répartir les bits protégés dans la trame de façon que deux bits d'un bloc au plus puissent être affectés par une étincelle. Pour cela il est nécessaire que :

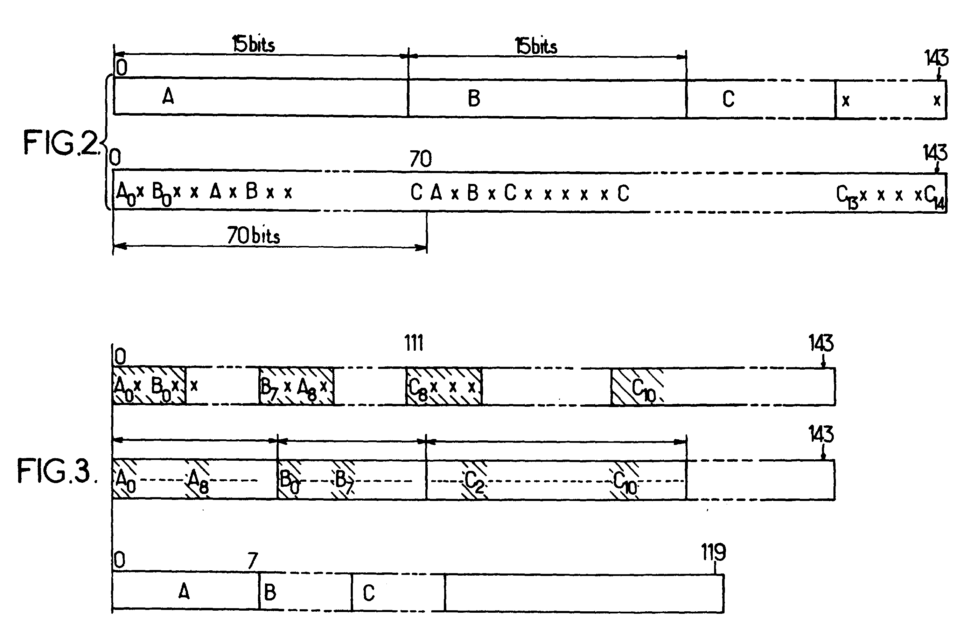

- deux bits successifs d'un même bloc A, B ou C soient séparés au moins de quatre bits ; et
- l'ensemble de tous les bits d'un même bloc occupe une durée inférieure à celle qui sépare deux étincelles successives à la vitesse maximale du moteur, pour que te bloc ne puisse être affecté par plus de deux étincelles. Lorsque l'écart entre deux étincelles descend jusqu' à 36 bits (moteur à vitesse maximum) l'entrelacement devra être tel qu'un bloc de 15 bits soit transmis en moins de 70 bits. La figure 2 montre un exemple d'entrelacement de ce genre.

Modulation

On ne décrira pas ici la technique de modulation qui peut être classique. Comme on l'a indiqué plus haut, on utilise avantageusement la modulation GMKS.

A la réception, on effectue les opérations complémentaires de celles intervenant à l'émission. Le désentrelacement s'effectue de façon classique et restitue la trame montrée à la quatrième ligne de la figure 1, mais éventuellement affectée d'erreurs.

Ces erreurs sont au moins en partie éliminées lors du décodage. A titre d'exemple, la première ligne de la figure 3 montre un cas où les étincelles d'allumage affectent quatre fois quatre bits (zones hachurées) parmi lesquels les bits protégés

$A_0$, $A_8$
$B_0$, $B_7$
$C_2$, $C_{10}$

Ces bits affectés sont répartis à raison de deux dans chacun des blocs protégés (deuxième ligne de la figure 3) et le décodage restitue les bits d'origine. La probabilité d'erreur étant chaque fois de 1/2, le codage permet dans la moitié des cas de corriger une erreur aléatoire supplémentaire, non due aux étincelles, concernant un bit protégé.

Classiquement le décodage consiste en une décision par g(x) qui fournit la valeur du syndrome S.

Si le syndrome est nul, le mot reçu est un mot du code et l'on en déduit qu'il n'y a pas eu d'erreur de transmission.

Si le syndrome S est non nul, on le compare avec toutes les valeurs correspondant à des configurations d'erreurs corrigeables, conservées en mémoire. Si S fait partie de la table, on corrige les bits erronés. Si la valeur de S n'est pas mémorisée, il y a envoi d'un signal d'erreur de transmission qui peut être utilisé pour provoquer, suivant l'état du décodeur :

- la mise des valeurs de sortie à zéro,
- la répétition de la trame précédente décodée.

La restitution s'effectue en utilisant les impulsions pour exciter un filtre de synthèse.

Lorsque le même canal doit être utilisé alternativement pour transmettre la parole et les données, on utilisera un mode de codage de données adapté aux caractéristiques de la transmission de parole. On pourra notamment, dans le cas ci-dessus, adopter une transmission par paquets de 1200 bits, plus les bits de synchronisation, codés à l'aide d'un code de détection d'erreurs et répétition des paquets présentant des erreurs qui ne peuvent être corrigées par le code redondant utilisé.

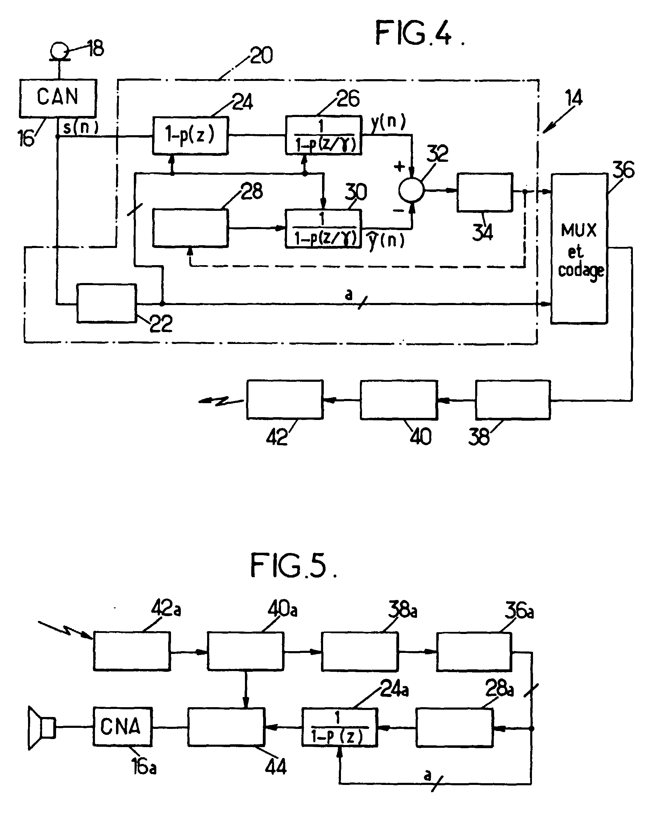

L'installation de transmission peut avoir la constitution de principe montrée en figures 4 et 5. L'émetteur 14 comprend un convertisseur analogique/numérique 16 à échantillonnage qui reçoit le signal analogique de parole d'un microphone 18 et applique les échantillons s(n) à une cadence de 8 kHz et un débit de 96 kbits/s à l'ensemble d'analyse MPLPC 20. L'ensemble peut être regardé comme ayant un circuit d'analyse par prédiction linéaire 22 qui fournit directement les coefficients a du filtre LPC. Les positions et l'amplitude des impulsions sont déterminées par un montage ayant en entrée un filtre 24 auquel le circuit d'analyse 22 donne une fonction de transfert inverse de celle du filtre de synthèse 24a utilisé à la réception (figure 5) ; le filtre 24 est suivi d'un filtre de synthèse 26, également commandé par l'analyseur 22, qui donne en sortie un signal y(n), représentation de s(n). La fonction de transfert de ce filtre 26 est modifiée par substitution de la variable z/γ (γ étant un coefficient de pondération destiné à obtenir l'effet de masquage mentionné plus haut) à z. Une valeur reconstituée s(n) est fournie par le générateur d'impulsions 28 qui attaque un filtre 30 identique au filtre de synthèse 26. Les sorties des filtres 26 et 30 attaquent les entrées d'un soustracteur 32 qui fournit en sortie l'erreur à minimiser. Le signal d'erreur fourni par le soustracteur constitue la variable d'entrée d'un algorithme de minimisation de l'énergie de l'erreur, algorithme qui peut être classique et qui est schématisé sur la figure par le circuit 34 qui corrige les caractéristiques des impulsions par commande du générateur 28.

Les bits émis en parallèle par les circuits 22 et 32 sont appliqués au circuit de codage 36 qui regroupe les bits et les codes en trame avec la répartition montrée en ligne 4 de la figure 1. Puis le signal est soumis à entrelacement en 38. Les trames entrelacées sont complétées par un mot de synchronisation en 40 et appliquées au modulateur d'émission 42.

Dans la pratique l'ensemble des fonctions des circuits 22 à 38 peuvent être remplies par un processeur de signal TMS 32010 fonctionnant en temps réel.

Le récepteur (figure 5) peut de son côté comporter un démodulateur 42a et un circuit 40a de récupération de synchronisation. Les autres fonctions jusqu' à conversion N/A en 16a peuvent être assurées par un processeur TMS 32010, qui effectue le désentrelacement en 38a, la correction d'erreurs en 36a, la génération d'impulsions en 28a. Le filtre 24 reçoit les impulsions du générateur 28a et les coefficients du circuit de correction d'erreurs 36a. Un traitement des pertes par répétition ou insertion de blancs peut être effectué par le processeur de signal en 44 : par exemple, en stockant les informations sur l'excitation pendant les trames considérées comme bonnes, on peut effectuer lorsque c'est nécessaire une prédiction du fondamental sur les trames passées. Les coefficients du filtre de prédiction de la fenêtre précédente sont conservés pendant le trou puis interpolés lors du retour d'informations.

**Revendications**

1. Procédé de transmission numérique de parole par voie radio-électrique, entre mobiles, suivant lequel : on échantillonne le signal de parole et on numérise les échantillons ; on soumet les bits obtenus à une analyse par prédiction linéaire à excitation multi-impulsionnelle (MPLPC) : on regroupe les bits de poids fort d'amplitude et de coefficient des trames MPLPC obtenues sous forme de plusieurs blocs de chacun plusieurs bits à protéger ; on code chacun des blocs à protéger par bloc à l'aide d'un code redondant de correction d'erreur : et on entrelace les bits protégés et les bits restants, caractérisé en ce qu'on constitue les blocs protégés d'un nombre de bits tel que la durée d'un bloc soit inférieure à l'intervalle de temps pendant lequel le nombre de parasites impulsionnels d'origine électrique provenant du moteur du véhicule, à la vitesse maximale du moteur, est supérieur au nombre d'erreurs que peut corriger le code correcteur sur un même bloc.

2. Procédé selon la revendication 1 de transmission de parole sur canal radio numérique à 80 MHz, avec espacement d'environ 12,5 kHz, caractérisé en ce qu'on échantillonne la parole à une fréquence de 8 kHz, on répartit les échantillons codés et entrelacés en trames de 160 échantillons et on analyse par prédiction linéaire à excitation multi- impulsionnelle en modélisant la parole par un modèle autorégressif d'ordre 8, le signal d'excitation étant découpé pour être affecté à 5 intervalles de 32 échantillons, affectés chacun d'une paire d'échantillons non nuls.

3. Procédé selon la revendication 2, caractérisé en ce qu'on affecte 120 bits de signal analysé à chaque trame, avec un taux de redondance tel que la transmission s'effectue sous forme de trames de 160 bits ayant, en plus d'un octet de synchronisation et d'un octet de champ, 144 bits utiles.

4. Procédé selon la revendication 3, caractérisé en ce que 120 bits de la trame de signal analysé sont répartis en :

   - 85 bits représentant la position des impulsions,
   - 5 bits représentant l'énergie ou amplitude des impulsions,
   - 30 bits représentant les coefficients du filtre,

   et en ce que seuls sont codès 21 bits de poids fort parmi les bits d'énergie et de coefficients.

5. Procédé selon la revendication 4, caractérisé en ce que les bits codés sont 3 bits d'énergie et 18 bits de coefficients.

6. Installation de transmission numérique vers des véhicules à moteur permettant de mettre en oeuvre le procédé de la revendication 1, comprenant, dans un poste d'émission, un ensemble d'analyse MPLPC (20) suivi d'un circuit de codage par bloc (36) et d'un circuit d'entrelacement (38),

   ledit ensemble d'analyse (20) comportant deux branches en parallèle, l'une des branches ayant un circuit d'analyse (22) fournissant les coefficients des filtres et l'autre branche ayant un générateur d'impulsions (28) commandé par un circuit de minimisation d'erreur (34) qui reçoit, en entrée, la différence entre une représentation numérique du signal d'entrée et une valeur reconstituée à partir des impulsions et d'un filtre de synthèse (30) commandé par le circuit d'analyse, et

lesdits circuits de codage et d'entrelacement (38) regroupant les bits obtenus par analyse MPLPC en blocs protégés par un code redondant à correction d'erreurs, lesdits blocs étant constitués d'un nombre de bits tel que la durée d'un bloc soit inférieure à l'intervalle de temps pendant lequel le nombre de parasites impulsionnels d'origine électrique provenant d'un moteur de véhicule, à la vitesse maximale d'un moteur à explosion courant de véhicule, est supérieur au nombre d'erreurs que peut corriger le code correcteur sur un même bloc.

## Patentansprüche

1. Verfahren zur digitalen Sprachübertragung über eine Funkverbindung zwischen mobilen Stationen, wonach

   - man Meßwerte des Sprachsignals erfaßt und man die Meßwerte digitalisiert;
   - man die erhaltenen Bits einer Analyse zur linearen Multipulserregungsvorhersage (MPLPC) unterzieht;
   - man die mit starkem Gewicht versehenen Amplituden- und Koeffizienten-Bits der MPLPC-Bitmuster umgruppiert, die in Gestalt mehrerer Blöcke mit jeweils mehreren zu schützenden Bits erhalten wurden;
   - man blockweise jeden der zu schützenden Blöcke mit Hilfe eines redundanten Fehlerkorrekturkodes kodiert;und
   - man die geschützten Bits und die übrigen Bits verwürfelt,

   **dadurch gekennzeichnet, daß**

   - man die geschützten Blöcke mit einer derartigen Anzahl von Bits bildet, daß die Dauer eines Blockes kleiner ist als die Dauer während der die Anzahl von Störpulsen elektrischen Ursprungs von dem Fahrzeugmotor bei Höchstgeschwindigkeit des Motors größer ist als die Anzahl von Fehlern, die der Korrekturkode auf einem selben Block korrigieren kann.

2. Verfahren nach Anspruch 1 zur digitalen Sprachübertragung über einen Radiokanal bei 80 MHz, mit einem Bandabstand von etwa 12,5 kHz, dadurch gekennzeichnet, daß

   - man mit einer Frequenz von 8 kHz Meßwerte der Sprache erfaßt,
   - man die kodierten und verwürfelten Meßwerte in Sätzen von 160 Meßwerten verteilt und
   - man über lineare Multipulserregungsvorhersage analysiert, indem man die Sprache über ein autoregressives Modell der Ordnung 8 modelliert, wobei das Erregungssignal zerlegt wird, damit es fünf Intervallen mit 32 Meßwerten zugewiesen werden kann, die jeweils einem Paar von von Null verschiedenen Werten zugeordnet sind.

3. Verfahren nach Anspruch 2, dadurch gekennzeichnet, daß man 120 Bits des analysierten Signals jedem Bitmuster zuordnet mit einem Redundanzverhältnis, so daß die Übertragung in Form von Bitmustern von 160 Bits vollzogen wird, die zusätzlich zu einem Synchronisationsbyte und einem Byte für einen freien Platz 144 nutzbare Bits haben.

4. Verfahren nach Anspruch 3, dadurch gekennzeichnet, daß 120 Bits des Bitmusters des analysierten Signals aufgeteilt sind in:

   - 85 Bits, die die Lage der Pulse darstellen,
   - 5Bits, die die Energie oder Amplitude der Pulse darstellen,
   - 30 Bits, die die Koeffizienten des Filters darstellen und
   - daß nur 21 Bits mit starkem Gewicht von den Energiebits und den Koeffizientenbits kodiert werden.

5. Verfahren nach Anspruch 4, dadurch gekennzeichnet, daß die kodierten Bits 3 Energiebits und 18 Koeffizientenbits sind.

6. Einrichtung von digitaler Übertragung, die es erlaubt, das Verfahren des Anspruches 1 durchzuführen, gekennzeichnet durch eine MPLPC-Analyse-Einheit (20) in einer Sendestelle, gefolgt von einem Block-Kodier-Kreis (36) und einem Verwürfelungskreis (38), wobei die genannte Analyse-Einheit (20) zwei parallele Zweige umfaßt, wobei der eine Zweig einen Analysekreis (22) aufweist, der die Koeffizienten der Filter liefert, und der andere Zweig einen Pulsgenerator (28) aufweist, der durch einen Kreis zur Fehlerminimierung (34) gesteuert wird, der am Eingang die Differenz zwischen einer digitalen Darstellung des Eingangssignals und einem Wert empfängt, der auf der Grundlage der Pulse und eines vom Analysekreis gesteuerten Synthese-Filters (30) wiederhergestellt wird und wobei die genannten Kodier- und Verwürfelungskreise (38) die durch MPLPC erhaltenen Bits in durch einen redundanten Fehlerkorrekturkode geschützte Blöcke umgruppiert, wobei die genannten Blöcke mit einer derartigen Anzahl von Bits gebildet sind, daß die Dauer eines Blockes kleiner ist als die Dauer während der die Anzahl von Störpulsen elektrischen Ursprungs von dem Fahrzeugmotor bei Höchstgeschwindigkeit des Motors größer ist als die Anzahl von Fehlern, die der Korrekturkode auf einem selben Block korrigieren kann.

## Claims

1. A method of digital speech transmission by radioelectric means between moving objects, in which the speech signal is sampled and the samples are digitised, the resulting bits are analysed by linear prediction with multi-pulse excitation (MPLPC) ; the most significant amplitude and coefficient bits of the resulting MPLPC frames are regrouped in the form of a number of blocks, each containing a plurality of bits to be protected ; each block to be protected is coded with a redundant error-correction code ; and the protected bits and the remaining bits are interleaved

   characterized in that the protected blocks are constituted by a number of bits such that the duration of the block be shorter than the time interval during which the number of interferences pulses of electrical origin originating from the engine of the vehicle, at the maximum speed of the engine, be greater than the number of errors in a single block which can be corrected by the correcting code.

2. A method according to claim I for speech transmission on an 80 MHz digital radio channel with a spacing of about 12.5 kHz, characterised in that the speech is sampled at a frequency of 8 kHz, the coded interlaced samples are distributed among 160-sample frames and the speech is analysed by linear prediction with multi-pulse excitation by modelling the speech by an eighth-order auto-regressive model, the excitation signal being cut up and allocated to five 32-sample intervals each allocated a pair of non-zero samples.

3. A method according to claim 2, characterised in that 120 bits of the analysed signal are allocated to each frame, with a redundancy ratio such that transmission is in the form of 160-bit frames containing 144 useful bits in addition to a synchronisation octet and a field octet.

4. A method according to claim 3, characterised in that the 120 bits in the analysed signal frame are distributed as follows:

   - 85 bits representing the position of the pulses,

   - 5 bits representing the energy or amplitude of the pulses, and

   - 30 bits representing the filter coefficients,

   and only 21 high-order bits among the energy bits and the coefficient bits are coded.

5. A method according to claim 4, characterised in that the coded bits are 3 energy bits and 18 coefficient bits.

6. A digital transmission installation for working the method according to claim 1, comprising, in a transmission station, an MPLPC analysis assembly (20) followed by a circuit (36) for coding by blocks and an interleaving circuit (38), said analysis assembly (20) comprising two branches in parallel, one branch comprising an analysis circuit (22) supplying the filter coefficients and the other branch comprising a pulse generator (28) controlled by an error minimisation circuit (34), the input of which receives the difference between a digital representation of the input signal and a value reconstituted from the pulses and a synthesis filter (30) controlled by the analysis circuit, and

   said coding and interleaving circuit (38) regrouping the bits obtained by MPLPC analysis in two blocks protected by a redundant error correcting code, said blocks consisting of a number of bits such that the duration of a block be shorter than the time interval which the number of interference pulses of electrical origin coming from vehicle engine, at a maximum speed of a regular spark ignited engine of a vehicle, is higher than the number of errors that can be corrected by the correcting code on a same block.

160 éch.

5 bits | 30 bits | 85 bits          MPLPC

99 bits

7 | 7 | 7

144 bits

A | B | C

A·B··A·B — — — B·A·

1 octet | 1 octet

144 bits

10  12

FIG.1.

EP 0 311 494 B2

FIG.2.

15bits — 15bits

0 — 143

| A | B | C | x | x |

0 — 70 — 143

$A_0$ x $B_0$ x x $A$ x $B$ x x — $C$ $A$ x $B$ x $C$ x x x x x $C$ — $C_{13}$ x x x x $C_{14}$

70 bits

FIG.3.

0 — 111 — 143

$A_0$ x $B_0$ x x — $B_7$ x $A_8$ x — $C_8$ x x x — $C_{10}$

143

$A_0$ ----- $A_8$ — $B_0$ ----- $B_7$ — $C_2$ ----- $C_{10}$

0 — 7 — 119

| A | B | C | |

EP 0 311 494 B2

# FIG.4.

# FIG.5.